# EUROPEAN PATENT SPECIFICATION

(11) **EP 3 974 741 B1**
(45) Date of publication and mention of the grant of the patent: **06.03.2024**
(21) Application number: 21199461.1
(22) Date of filing: 28.09.2021
(51) Int. Cl.: F24F 13/20, F24F 7/013, E06B 7/10

(54) **AIR TREATMENT DEVICE AND INSTALLATION METHOD OF THE SAME**
LUFTBEHANDLUNGSVORRICHTUNG UND INSTALLATIONSVERFAHREN DAFÜR
DISPOSITIF DE TRAITEMENT DE L'AIR ET SON PROCÉDÉ D'INSTALLATION

(30) Priority: 28.09.2020 IT 202000022837
(43) Date of publication of application: 30.03.2022
(73) Proprietor: Helty S.r.l., 36015 Schio (VI) (IT)
(72) Inventor: DALLA VIA, Luciano, 36015 SCHIO (VI) (IT)
(74) Representative: Studio Torta S.p.A.

(56) References cited:
- EP-A2- 1 837 610
- WO-A1-2019/144150
- DE-A1-102011 080 358
- DE-U1-202005 010 854

## Description

### TECHNICAL FIELD

The present invention concerns an air treatment device.

In particular, the present invention concerns an air treatment device known as single-chamber residential controlled mechanical ventilation device without loss of generality. As it is known, controlled mechanical ventilation has the purpose of ensuring an adequate air exchange in residential environments. Often the air exchange also entails filtering of the incoming air to ensure cleaning of the air in the residential environment and heat exchange between the incoming air and the outgoing air to limit energy losses.

### BACKGROUND ART

Examples of air treatment devices are disclosed in documents EP 1,837,610, WO 2019/144150, DE 202005010854 and DE 102011080358.

In general, air treatment devices can alter the aspect of the perimeter walls, in particular the facades of buildings, if applied on the outside of the buildings and/or at least partly the aspect of the room, if installed inside. To avoid this drawback in new buildings featuring a single block structure, the controlled ventilation modules are integrated inside the single blocks as described in the patent EP 3,372,908. The single block is a square or portal structure, which is fixed to the walls that delimit an opening in a perimeter wall of the building designed to house a door or a window of the building.

However, this solution is not always practicable in existing buildings unless radical renovation of the building is carried out entailing replacement of the door and window frames.

### DISCLOSURE OF INVENTION

The purpose of the present invention is to provide an air treatment device that can be easily concealed from view.

In accordance with the present invention, an air treatment device is provided, the device comprising:
- a first flat-shaped casing configured to be housed in an insulating cladding of a perimeter wall of a building and comprising a first box-shaped body; a first lateral panel; and at least a first mouth for the passage of at least one air flow; and
- a second flat-shaped casing configured to be housed in the insulating cladding of the perimeter wall and comprising a second box-shaped body; a second lateral panel, which is selectively removable from the second box-shaped body; and at least one second mouth for the passage of at least one air flow; the first casing being configured to be housed in the second casing and selectively inserted and extracted in/from the second box-shaped body; the at least first mouth being in communication with the second mouth for the passage of said at least air flow.

In this way it is possible to build, at least partly, the air treatment device in the insulating cladding in a simple and inexpensive manner. In particular, the first casing can be concealed from view during the production of an outer or inner insulating cladding. It is known that many existing buildings have a low energy class which can therefore be improved with the thermal insulation techniques known under the definition "exterior insulation". It is evident that the insulating cladding can be applied on the inside or outside.

Moreover, it is possible to extract the first casing from the second casing to carry out extraordinary maintenance operations with ease.

Preferably, the first lateral panel is arranged flush with or near a face that forms at least one edge with at least one outer face of the perimeter wall.

Furthermore, the position of the first lateral panel near to or flush with the face that forms an edge with the outer and/or inner face of the perimeter wall makes the first casing easily accessible although housed in the perimeter wall.

In particular the device may comprise a third casing comprising at least one third lateral panel and at least one third mouth to allow the passage of the at least one air flow respectively and configured to be arranged on the opposite side of the first casing with respect to the perimeter wall; and at least one connection channel to connect the first casing to the third casing through the perimeter wall and allow the passage of said at least one air flow.

In this way, communication is established between the inside and the outside of the building.

In particular, the third casing may be fixed to the perimeter wall and is preferably housed in the perimeter wall.

The entire device may be ia supported by the perimeter wall and preferably concealed in the perimeter wall.

In particular, the perimeter wall may comprise a load-bearing or curtain wall and the insulating cladding close to the load-bearing or curtain wall, the second casing may be made of thermally insulating material, in particular EPS, so as to obtain part of the insulating cladding.

In this way, the second casing does not interrupt the continuity of the insulating cladding. On the contrary, the second casing is preferably made like an insulating panel in terms of material, shape and dimensions: the height and the width of the second casing correspond to a standard height and width of the insulating panels commonly used to thermally insulate buildings and create the so-called "exterior insulation and finish systems". Since the insulating panels are made with different thicknesses according to the type of insulation desired, the thickness of the first casing is equal to one of said thicknesses of commonly used panels. If the insulating cladding is thicker than the first casing, this difference can be compensated by affixing a panel with complementary thickness on the first casing.

In particular, the first, the second and the third casings comprise two first mouths, two second mouths and two third mouths respectively, in particular the first mouths are arranged at a given distance from one another and the second mouths are arranged at a distance from one another and face the respective first mouths.

In this way, the air treatment device may treat two separate and distinct air flows and guarantees greater air treatment efficiency. The distance between the mouths prevents interferences and recirculations between the incoming air flow and the outgoing air flow.

Preferably, the second lateral panel is arranged flush with said face which forms at least one edge with at least the outer face of the perimeter wall.

In this way the surface visible from the outside of the ventilation device is limited to the second lateral panel, which has reduced dimensions.

The first and the second mouths may be arranged along the first and the second lateral panels respectively so as to allow easy access to the mouths, in particular for the replacement of any filters arranged at the mouths.

The device may further comprise at least one fan; and at least one heat exchanger; and a plurality of separator baffles distributed along a same plane and housed in the first casing. The distribution of the various components along the same plane allows realization of the first and second casings with a particularly limited thickness and such as to allow them to be arranged one inside the other in the insulating cladding.

Preferably, the first box-shaped body comprises two facing and parallel base panels, the heat exchanger and the plurality of separator baffles being in contact with both the base panels defining a stiffening function of the base panels and of the entire first casing.

Each of the first and second fans may be arranged between said base panels and two spacers. In this way, the thinnest components, as in this case the fans, are secured between the base panels.

The separator baffles and the spacers may be fixed, preferably glued, to one of the base panels or may be entirely made with one of the base panels.

In particular, the heat exchanger may be ij arranged in a central position, while the two fans are arranged on opposite sides with respect to the heat exchanger and near respective third mouths.

Preferably, the first casing is made of polymeric material, in particular PSU.

Since also this material has heat insulating properties, also the first casing contributes to achieving the thermal insulation in addition to being easy to work and mouldable. A further object of the present invention is to provide a method for installing an air treatment device along a perimeter wall of a building which is free from the drawbacks of the known art.

In accordance with the present invention a method for installing an air treatment device along a perimeter wall of a building according to claim 14 is provided.

In this way, the first and second casing is easily installed in the perimeter wall when applying the insulating cladding.

Preferably, the first lateral panel is arranged flush with or near to said face.

In this way, the first casing remains easily accessible once it has been installed in the perimeter wall.

### BRIEF DESCRIPTION OF THE DRAWINGS

Further characteristics and advantages of the present invention will be clear from the following description of a non-limiting embodiment thereof, with reference to the attached figures, in which:
- Figure 1 is a perspective view, with parts removed for clarity, of a controlled mechanical ventilation device realised in accordance with the present invention and installed in a wall of a building;
- Figure 2 is a lateral elevation view, with parts removed for clarity, of a detail of Figure 1;
- Figures 3 and 4 are perspective views, with parts removed for clarity, of the controlled mechanical ventilation device subject of the present invention;
- Figure 5 is a sectional view, with parts removed for clarity, of the device of Figure 1 according to the section lines V-V;
- Figure 6 is a perspective and partially exploded view, with parts removed for clarity, of a detail of a variation of the controlled mechanical ventilation device of Figure 1; and
- Figure 7 is a lateral elevation view, with parts removed for clarity, of an air treatment device not in accordance with the present invention.

### BEST MODE FOR CARRYING OUT THE INVENTION

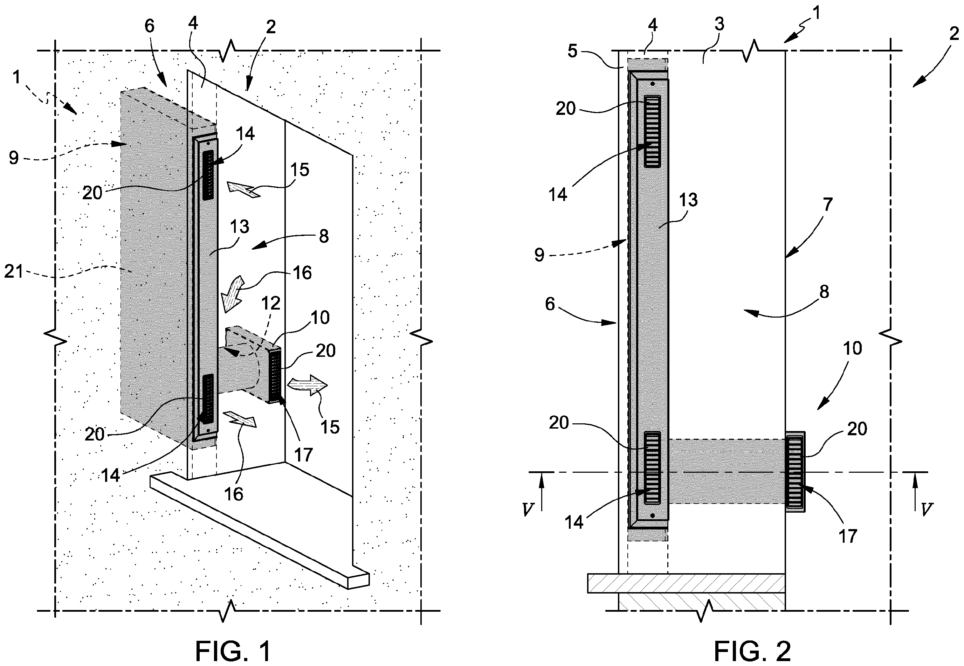

With reference to Figure 1, the number 1 indicates overall a controlled mechanical ventilation device arranged at an edge of a perimeter wall 2 of a building, in this case at an opening for a window. In general, the device 1 is configured to be arranged at any edge of the perimeter wall 2.

With reference to Figure 2, the perimeter wall 2 comprises a load-bearing or curtain wall 3 and an insulating cladding 4, which can be of the type applied in a phase subsequent to construction of the building and classified as exterior insulation and finish system in order to improve the energy class of the building. In the case illustrated the insulating cladding 4 is external to the building but it is understood that it could also be positioned inside the building. The perimeter wall 2 further comprises a layer of outer cladding 5 applied to the insulating cladding 4. The perimeter wall 2 has an outer face 6; an inner face 7; and a face 8 that forms respective edges with the outer face 6 and with the inner face 7.

In the case illustrated in Figure 1, the device 1 comprises a second flat-shaped casing 9 arranged in the insulating cladding 4; a third casing 10, also flat-shaped, and arranged along the inner face 7; and a connection duct 11 to connect the casings 9 and 10 which extends through a hole 12 made in the supporting structure 3 of the perimeter wall 2. The second casing 9 has a second lateral panel 13 that partly defines the face 8 and along which two mouths 14 are arranged for the passage of the air flows 15 and 16 respectively, travelling in opposite directions. The two mouths 14 are arranged at the opposite ends of the second lateral panel 13 at a distance from each other. The third casing 10 comprises two mouths 17, only one of which is illustrated in Figures 1 and 2, for the passage of the air flows 15 and 16 respectively.

The air flow 15 is sucked to the outside of the building, flows inside the device 1, and is discharged inside the building. In the opposite direction, the air flow 16 is sucked to the inside of the building, flows inside the device 1 and is discharged outside the building. Inside the device 1 the air flows 15 and 16 are kept separate and undergo heat exchange. The mouths 14 and 17 are protected by grilles 20 and house filters not illustrated in the attached figures.

The second casing 9 substantially has the shape of a parallelepiped with a second box-shaped body 21 and the lateral panel 13, which is selectively removable from the second box-shaped body 21 so as to allow access to the inside of the main body 21. The casing 9 is made of thermally insulating material and contributes to partly define the insulating cladding 4. In particular, the casing 9 is made of EPS.

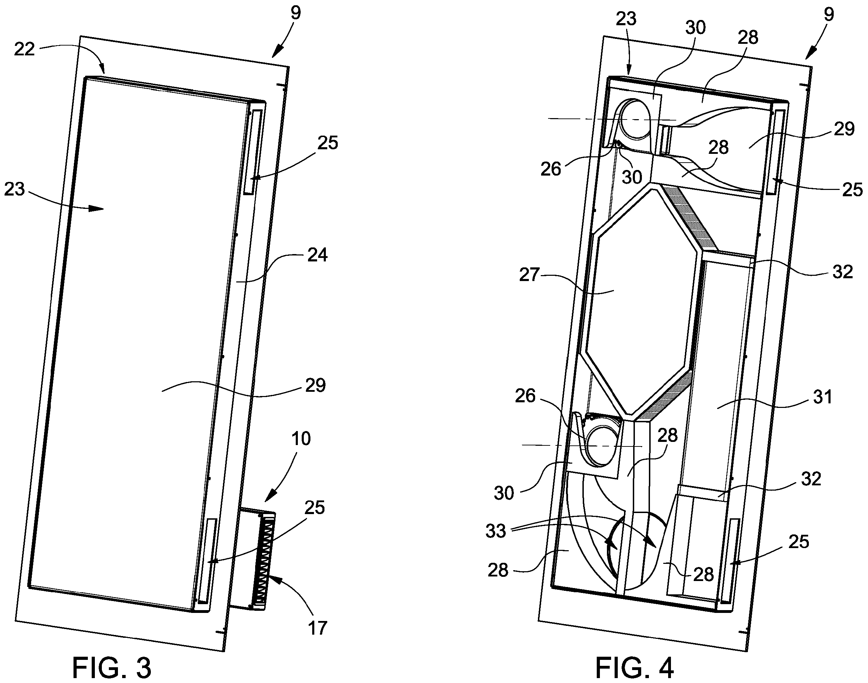

With reference to Figure 3 in which the second lateral panel 13 is removed and the second box-shaped body 21 is partially removed, the controlled mechanical ventilation device 1 comprises a first flat-shaped casing 22, which is configured to be housed in the second flat-shaped casing 9 and selectively inserted and extracted in/from the second box-shaped body 21 when the second lateral panel 13 is removed. The first casing 22 comprises a first box-shaped body 23 and a first lateral panel 24 provided with two mouths 25 in communication with the respective mouths 14 for the passage of the respective air flows 15 and 16 (Figure 1).

With reference to Figure 4 in which also the box-shaped body is partially removed, the first box-shaped body 23 is configured to house two fans 26; a heat exchanger 27; and a plurality of said separator baffles 28 configured to separate the air flows 15 and 16 inside of the first box-shaped body 23. The fans 26, the heat exchanger 27 and the plurality of separator baffles 28 are distributed along a same plane.

The first box-shaped body 23 comprises two base panels 29 and each fan 26 is arranged between the two base panels 29 and between two spacers 30.

In the case illustrated, the device 1 comprises a flow channelling element 31 arranged inside the first box-shaped body 23 beside the heat exchanger 27. A seal 32 is arranged between the flow channelling element 31 and the heat exchanger 27 and the base panel 29.

In construction terms the separator baffles 28 and said spacers 30 are glued to one of said base panels 29 or produced integral with one of said base panels 29.

The heat exchanger 27 is arranged in a central position, while the two fans 26 are arranged on opposite sides relative to the heat exchanger 27 and near respective second mouths 25.

The plurality of separator baffles 28 defines a first path for the air flow 15 and a second path for the air flow 16 in the first box-shaped body 23. The first and the second path intersect inside the heat exchanger 27 while remaining separated from each other.

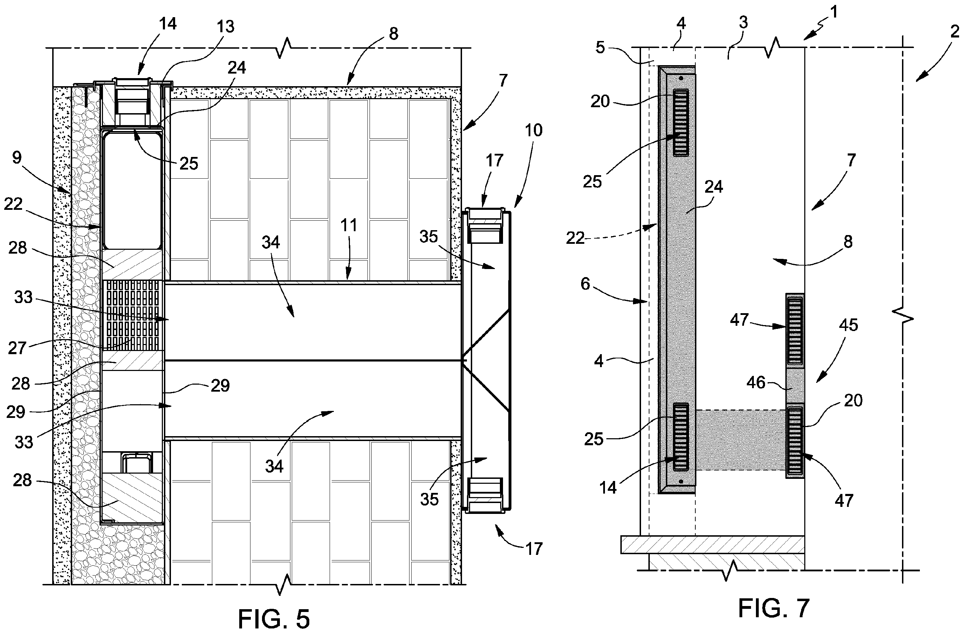

With reference to Figure 5, the box-shaped bodies 21 and 23 comprise openings 33 for establishing fluidic communication between the first casing 22 and the connection duct 11, which has two channels 34 that flow into two respective channels 35 leading to the respective mouths 17 in the third casing 10.

In construction terms, the first casing 22 is made of polymer material, in particular PSU. The connection duct 11 and the third casing 10 are made of polymer material, in particular PVC, or in some cases metal material.

With reference to Figures 1 and 2, installation of the controlled mechanical ventilation device 1 entails preliminarily installing, during execution of the insulating cladding 4, the box-shaped body 21, the connection duct 11 in the supporting structure 3 of the perimeter wall 2 and if necessary, the third casing 10. At the same time, the electric power-supply is provided in the compartment inside the second box-shaped body 21. Once the work for execution of the insulating cladding 4 and the plaster layer 5 has been completed, the first casing 22 (Figure 3) is connected to the electric power-supply and inserted in the second box-shaped body 21 which is closed by the second lateral panel 13.

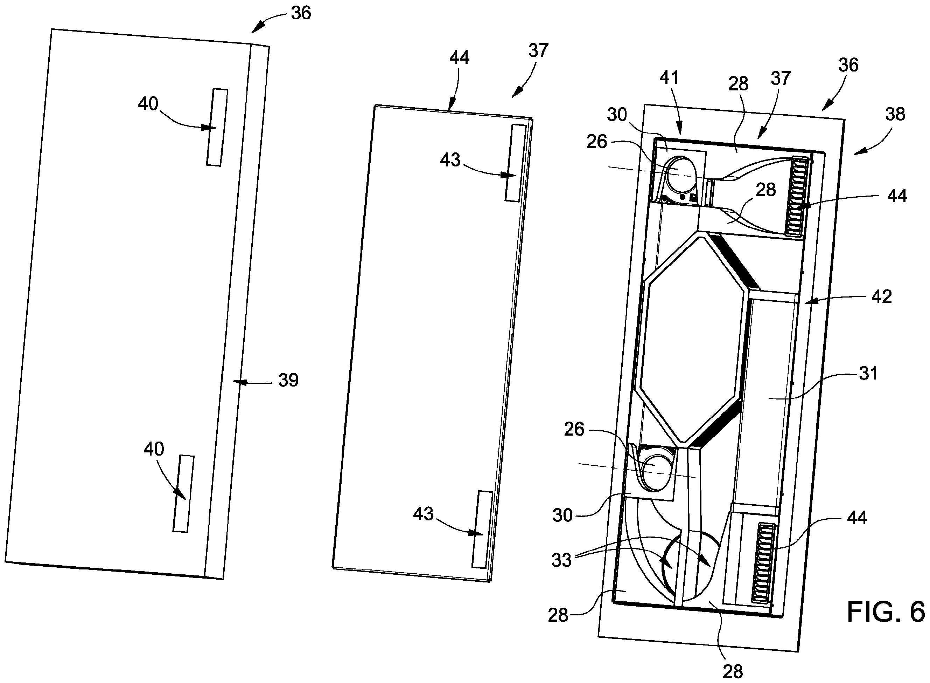

With reference to the variation of Figure 6, the device 1 comprises a second flat-shaped casing 36, partially exploded, in place of the second casing 9 (Figure 1) and a first flat-shaped casing 37, also partially exploded, in place of the first casing 22 (Figure 3) and which can be selectively inserted in the second casing 36. The second casing 36 comprises a second box-shaped body 38, partly exploded, and a second removable lateral panel 39 and two mouths 40 arranged in the second box-shaped body 38 in a frontal position.

Analogously, the first casing 37 comprises a P first box-shaped body 41, partly exploded, and a first removable lateral panel 42 and two mouths 43 arranged in the first box-shaped body 41 in a frontal position and facing the respective mouths 40.

The mouths 40 and 42 and the first casing 37 are configured to house respective grilles 44 provided with filters.

The components arranged inside the first casing 37 are identical to those described in relation to Figure 4 and are indicated by the same reference numbers.

In this case the mouths 40 must be placed in communication with the outside through openings or slots along the outer cladding layer 5 (Figures 1 and 2).

With reference to the variation of Figure 7, the third casing 10 (Figures 1 and 2) is replaced by a third casing 45 housed inside the perimeter wall 2 at the edge formed by the face 8 and the inner face 7. The third casing 45 has a flat shape and has a third lateral panel 46 arranged flush with the face 8 and two mouths 47 arranged at the opposite ends of the third lateral panel 46. This configuration is advantageously applied when the door or window frame is arranged in a central position along the face 8.

Figure 7 shows an arrangement not in accordance with the invention, where the second casing 9 (Figures 1 and 2) is omitted and the first casing 22 is directly housed in the insulating cladding 4.

According to a variation not illustrated in the attached figures, the controlled mechanical ventilation device is provided with one single reversible fan and operates with one single alternate flow. The heat exchange is obtained due to the thermal inertia of the heat exchanger and the rapid inversion sequence of the air flow so that each casing comprises one single mouth instead of two. Lastly, it is obvious that variations can be made to the present invention with respect to the embodiment described without departing from the scope of the attached claims.

## Claims

1. An air treatment device, in particular for changing the air in rooms, the device (1) comprising:
- a first flat-shaped casing (22; 37) configured to be housed in an insulating cladding (4) of a perimeter wall (2) of a building and comprising a first box-shaped body (23; 41); a first lateral panel (24; 42); and at least one first mouth (25; 43) for the passage of at least one air flow; and
- a second flat-shaped casing (9; 36) configured to be housed in the insulating cladding (4) of the perimeter wall (2) and comprising a second box-shaped body (21; 38); a second lateral panel (13; 39), which is selectively removable from the second box-shaped body (21; 38); and at least one second mouth (14; 40) for the passage of at least one air flow; the first casing (22; 37) being configured to be housed in the second casing (9; 36) and selectively inserted and extracted in/from the second box-shaped body (21; 38); the at least first mouth (25; 43) being in communication with the second mouth (14; 40) for the passage of said at least air flow.

2. The device as claimed in claim 1, wherein the first lateral panel (24; 42) is configured to be arranged flush or near a face (8) forming at least one edge with at least one outer (6) or inner (7) face of the perimeter wall (2).

3. The device as claimed in claim 1 or 2, and comprising a third flat-shaped casing (10; 45) comprising at least one third lateral panel (46) and at least one third mouth (17; 47) configured to allow the at least one air flow (15, 16) to pass through, respectively, and configured to be arranged on the opposite side of the first casing (22; 37) with respect to the perimeter wall (2); and at least one connecting duct (34) adapted to connect the first flat-shaped casing (22; 37) to the third flat-shaped casing (10; 45) through the perimeter wall (2) and to allow the passage of said at least one air flow (15, 16).

4. The device as claimed in claim 3, wherein the third flat-shaped casing (10; 45) is fixable to the perimeter wall (2), preferably the third flat-shaped casing (45) is adapted to be housed in the perimeter wall (2).

5. The device as claimed in any of the previous claims, wherein the perimeter wall (2) comprises a load-bearing or curtain wall (3) and an insulating cladding (4) close to the load-bearing or curtain wall (3), the second flat-shaped casing (9; 36) being made of thermally insulating material, in particular EPS, so as to realize part of the insulating cladding (4).

6. The device as claimed in any of claims 3 to 5, wherein the first, second and third flat-shaped casing (22; 37, 9; 36, 10; 45) comprise respectively two first mouths (25; 43), two second mouths (14; 40) and two third mouths (17; 47), in particular the first mouths (25; 43) are arranged at a given distance from each other and the second mouths (14; 40) are arranged at a distance from each other and face the respective first mouths (25; 43).

7. The device as claimed in any of the previous claims, wherein the second lateral panel (13; 39) is configured to be arranged flush with the said face (8) forming at least one edge with at least the outer face (6) of the perimeter wall (2).

8. The device as claimed in claim 6 or 7, wherein the first and second mouths (25, 14) are arranged along the first and the third lateral panel (24, 13) respectively.

9. The device as claimed in any of the previous claims, and comprising at least one fan (26); and at least one heat exchanger (27); and a plurality of separator baffles (28) distributed along the same plane and housed in the first flat-shaped casing (22; 37) .

10. The device as claimed in claim 9, wherein the first box-shaped body (23; 41) comprises two base panels (29) facing and parallel to each other, the heat exchanger (27) and the plurality of separator baffles (28) being in contact with both base panels (29).

11. The device as claimed in claim 10, wherein at least the fan (26) is arranged between the said base panels (29) and between two spacers (30).

12. The device as claimed in claim 10 or 11, wherein said separator baffles (28) and said spacers (30) are fixed, in particular glued, to one of said base panels (29) or are made integral to one of said base panels (29).

13. The device as claimed in any of the foregoing claims, wherein the first casing (22; 37) is made of polymeric material, in particular PSU.

14. Method to install an air treatment device as claimed in any of the previous claims, the method comprising:
- applying an insulating cladding (4) on a load-bearing or curtain wall (3) of a perimeter wall (2) of a building that forms an edge between one face (8) and the outer face (6) and/or the inner face (7) of the perimeter wall; and
- housing in the insulation cladding (4) the first flat-shaped casing (22; 37) of the air treatment device, comprising first box-shaped body (23; 41); the first lateral panel (24; 42) ; und at least one first mouth (25; 43) for the passage of at least one air flow ;- housing in the insulation cladding (4) the second flat-shaped casing (9; 36), comprising the second box-shaped body (21; 38); the second lateral panel (13; 39), and at least one second mouth (14; 40) for the passage of at least one air flow;
wherein the first casing (22; 37) is housed in the second casing (9; 36) and selectively inserted and extracted in/from the second box-shaped body (21; 38); and wherein the at least first mouth (25; 43) is in communication with the second mouth (14; 40) for the passage of said at least air flow into the insulating cladding (4) when applying the insulating cladding (4).

15. Method as claimed in claim 15, and comprising arranging the first lateral panel (24; 42) flush with or near said face (8) .

## Patentansprüche

1. Luftbehandlungsvorrichtung, insbesondere zur Veränderung der Luft in Räumen, wobei die Vorrichtung (1) umfasst:
- ein erstes flach geformtes Gehäuse (22; 37), das so konfiguriert ist, dass es in einer isolierenden Verkleidung (4) einer Außenwand (2) eines Gebäudes untergebracht werden kann, und das einen festen kastenförmigen Körper (23; 41), eine erste seitliche Platte (24; 42) und mindestens eine erste Öffnung (25; 43) für den Durchgang von mindestens einem Luftstrom umfasst; und
- ein zweites flach geformtes Gehäuse (9; 36), das so konfiguriert ist, dass es in der isolierenden Verkleidung (4) der Umfangswand (2) untergebracht werden kann, und das einen zweiten kastenförmigen Körper (21; 38), eine zweite seitliche Platte (13; 39), die selektiv aus dem zweiten kastenförmigen Körper (21; 38) entfernt werden kann, und mindestens eine zweite Öffnung (14; 40) für den Durchgang mindestens eines Luftstroms; wobei das erste Gehäuse (22; 37) so konfiguriert ist, dass es in dem zweiten Gehäuse (9; 36) untergebracht und selektiv in den/aus dem zweiten kastenförmigen Körper (21; 38) eingesetzt und herausgezogen werden kann; wobei die mindestens erste Mündung (25; 43) in Verbindung mit der zweiten Mündung (14; 40) für den Durchgang des mindestens einen Luftstroms steht.

2. Vorrichtung nach Anspruch 1, wobei die erste seitliche Platte (24; 42) so konfiguriert ist, dass sie bündig oder nahe einer Fläche (8) angeordnet ist, die mindestens eine Kante mit mindestens einer äußeren (6) oder inneren (7) Fläche der Umfangswand (2) bildet.

3. Vorrichtung nach Anspruch 1 oder 2, umfassend ein drittes flach geformtes Gehäuse (10; 45), das mindestens eine dritte seitliche Platte (46) und mindestens eine dritte Öffnung (17; 47) umfasst, die so konfiguriert sind, dass der mindestens eine Luftstrom (15, 16) hindurchtreten kann, und die so konfiguriert sind, dass sie auf der gegenüberliegenden Seite des ersten Gehäuses (22; 37) in Bezug auf die Umfangswand (2) angeordnet sind; und mindestens einen Verbindungskanal (34), der so ausgelegt ist, dass er das erste flach geformte Gehäuse (12; 37) mit dem dritten flach geformten Gehäuse (10; 45) verbindet und den Durchgang des mindestens einen Luftstroms (15, 16) ermöglicht.

4. Vorrichtung nach Anspruch 3, wobei das dritte flach geformte Gehäuse (10; 45) an der Umfangswand (2) befestigbar ist, vorzugsweise ist das dritte flach geformte Gehäuse (45) geeignet, in der Umfangswand (2) untergebracht zu werden.

5. Vorrichtung nach einem der vorhergehenden Ansprüche, wobei die Umfassungswand (2) eine Trag- oder Vorhangwand (3) und eine isolierende Verkleidung (4) in der Nähe der Trag- oder Vorhangwand (3) umfasst, wobei das zweite flach geformte Gehäuse (9; 36) aus thermisch isolierendem Material, insbesondere EPS, hergestellt ist, um einen Teil der isolierenden Verkleidung (4) zu realisieren.

6. Vorrichtung nach einem der Ansprüche 3 bis 5, wobei das erste, zweite und dritte flach geformte Gehäuse (22; 37, 9; 36, 10; 45) jeweils zwei erste Mündungen (25; 43), zwei zweite Mündungen (14; 40) und zwei dritte Mündungen (17; 47) aufweisen, insbesondere die ersten Mündungen (25; 43) in einem bestimmten Abstand zueinander und die zweiten Mündungen (14; 40) in einem Abstand zueinander angeordnet sind und den jeweiligen ersten Mündungen (25; 43) zugewandt sind.

7. Vorrichtung nach einem der vorhergehenden Ansprüche, wobei die zweite seitliche Platte (13; 39) so konfiguriert ist, dass sie bündig mit der genannten Fläche (8) angeordnet ist und mindestens eine Kante mit mindestens der Außenfläche (6) der Umfangswand (2) bildet.

8. Vorrichtung nach Anspruch 6 oder 7, wobei die erste und die zweite Mündung (25, 14) entlang der ersten bzw. der dritten Seitenwand (24, 13) angeordnet sind.

9. Vorrichtung nach einem der vorhergehenden Ansprüche mit mindestens einem Gebläse (26), mindestens einem Wärmetauscher (27) und einer Vielzahl von Abscheideblechen (28), die in der gleichen Ebene verteilt und in dem ersten flach geformten Gehäuse (22; 37) untergebracht sind.

10. Vorrichtung nach Anspruch 9, wobei der erste kastenförmige Körper (23; 41) zwei einander zugewandte und parallele Bodenplatten (29) umfasst, wobei der Wärmetauscher (27) und die mehreren Trennwände (28) in Kontakt mit beiden Bodenplatten (29) sind.

11. Vorrichtung nach Anspruch 10, bei der zumindest das Gebläse (26) zwischen den Grundplatten (29) und zwischen zwei Abstandshaltern (30) angeordnet ist.

12. Vorrichtung nach Anspruch 10 oder 11, bei der die Trennwände (28) und die Abstandshalter (30) an einer der Grundplatten (29) befestigt, insbesondere geklebt, sind oder mit einer der Grundplatten (29) einstückig ausgebildet sind.

13. Vorrichtung nach einem der vorhergehenden Ansprüche, wobei das erste Gehäuse (22; 37) aus einem polymeren Material, insbesondere PSU, besteht.

14. Verfahren zur Installation einer Luftbehandlungsvorrichtung nach einem der vorhergehenden Ansprüche, wobei das Verfahren umfasst:
- Aufbringen einer isolierenden Verkleidung (4) auf eine tragende oder vorgehängte Wand (3) einer Umfassungswand (2) eines Gebäudes, die eine Kante zwischen einer Fläche (8) und der Außenfläche (6) und/oder der Innenfläche (7) der Umfassungswand bildet; und
- Unterbringung des ersten flach geformten Gehäuses (22; 37) der Luftbehandlungsvorrichtung in der Isolierverkleidung (4), das zwischen einer Fläche (8) und der Außenfläche (6) und/oder der Innenfläche (7) der Umfangswand liegt; und
- Unterbringung des ersten flach geformten Gehäuses (22; 37) der Luftbehandlungsvorrichtung in der Isolierverkleidung (4), umfassend den ersten kastenförmigen Körper (23; 41); die erste seitliche Platte (24; 42); mindestens eine erste Öffnung (25; 43) für den Durchgang von mindestens einem Luftstrom
- Unterbringung des zweiten flach geformten Gehäuses (9; 36) in der Isolierverkleidung (4), das den zweiten kastenförmigen Körper (21; 38), die zweite seitliche Platte (13; 39) und mindestens eine zweite Öffnung (14; 40) für den Durchgang mindestens eines Luftstroms umfasst; wobei das erste Gehäuse (22; 37) in dem zweiten Gehäuse (9; 36) untergebracht ist und wahlweise in/aus dem zweiten kastenförmigen Körper (21; 38) eingesetzt und herausgezogen wird; und wobei die mindestens erste Öffnung (25; 43) mit der zweiten Öffnung (14; 40) für den Durchgang mindestens eines Luftstroms in Verbindung steht; 36) untergebracht ist und selektiv in den/aus dem zweiten kastenförmigen Körper (21; 38) eingesetzt und herausgezogen wird; und wobei die mindestens erste Mündung (25; 43) in Verbindung mit der zweiten Mündung (14; 40) für den Durchgang des mindestens einen Luftstroms in die isolierende Umhüllung (4) steht, wenn die isolierende Umhüllung (4) angebracht wird.

15. Verfahren nach Anspruch 15, bei dem die erste Seitenplatte (24; 42) bündig mit oder nahe der Fläche (8) angeordnet wird.

## Revendications

1. Dispositif de traitement de l'air, en particulier pour changer l'air dans des pièces, le dispositif (1) comprenant :
- un premier coffrage plat (22 ; 37) configuré pour être logé dans un doublage sec (4) d'un mur périmétrique (2) d'un bâtiment et comprenant un premier corps en forme de boîte (23 ; 41) ; un premier panneau latéral (24 ; 42) ; et au moins une première embouchure (25 ; 43) pour le passage d'au moins un écoulement d'air ; et
- un deuxième coffrage plat (9 ; 36) configuré pour être logé dans le doublage sec (4) du mur périmétrique (2) et comprenant un deuxième corps en forme de boîte (21 ; 38) ; un deuxième panneau latéral (13 ; 39), qui peut être sélectivement retiré du deuxième corps en forme de boîte (21 ; 38) ; et au moins une deuxième embouchure (14 ; 40) pour le passage d'au moins un écoulement d'air ; le premier coffrage (22 ; 37) étant configuré pour être logé dans le deuxième coffrage (9 ; 36) et sélectivement inséré dans le, et extrait du, deuxième corps en forme de boîte (21 ; 38) ; l'au moins une première embouchure (25 ; 43) étant en communication avec la deuxième embouchure (14 ; 40) pour le passage dudit au moins un écoulement d'air.

2. Dispositif selon la revendication 1, dans lequel le premier panneau latéral (24 ; 42) est configuré pour être agencé au niveau ou à proximité d'une face (8) formant au moins un bord avec au moins une face externe (6) ou interne (7) du mur périmétrique (2).

3. Dispositif selon la revendication 1 ou la revendication 2, et comprenant un troisième coffrage plat (10 ; 45) comprenant au moins un troisième panneau latéral (46) et au moins une troisième embouchure (17 ; 47) configurée pour permettre à l'au moins un écoulement d'air (15, 16) de traverser, respectivement, et configuré pour être agencé sur le côté opposé du premier coffrage (22 ; 37) par rapport au mur périmétrique (2) ; et au moins un conduit de raccordement (34) conçu pour raccorder le premier coffrage plat (22 ; 37) et troisième coffrage plat (10 ; 45) à travers le mur périmétrique (2) et pour permettre le passage de l'au moins un écoulement d'air (15, 16).

4. Dispositif selon la revendication 3, dans lequel le troisième coffrage plat (10 ; 45) peut être fixé au mur périmétrique (2), préférablement le troisième coffrage plat (45) est conçu pour être logé dans le mur périmétrique (2).

5. Dispositif selon l'une quelconque des revendications précédentes, dans lequel le mur périmétrique (2) comprend un mur porteur ou rideau (3) et un doublage sec (4) proche du mur porteur ou rideau (3), le deuxième coffrage plat (9 ; 36) étant constitué d'un matériau thermiquement isolant, en particulier du PSE, de façon à réaliser une partie du doublage sec (4).

6. Dispositif selon l'une quelconque des revendications 3 à 5, dans lequel les premier, deuxième et troisième coffrages plat (22 ; 37, 9 ; 36, 10 ; 45) comprennent respectivement deux premières embouchures (25 ; 43), deux deuxièmes embouchures (14 ; 40) et deux troisièmes embouchures (17 ; 47), en particulier les premières embouchures (25 ; 43) sont agencées à une distance donnée l'une de l'autre et les deuxièmes embouchures (14 ; 40) sont agencées à une distance l'une de l'autre et font face aux premières embouchures respectives (25 ; 43).

7. Dispositif selon l'une quelconque des revendications précédentes, dans lequel le deuxième panneau latéral (13 ; 39) est configuré pour être agencé au niveau de ladite face (8) formant au moins un bord avec au moins la face externe (6) du mur périmétrique (2).

8. Dispositif selon la revendication 6 ou la revendication 7, dans lequel les première et deuxième embouchures (25, 14) sont agencées le long des premier et troisième panneaux latéraux (24, 13) respectivement.

9. Dispositif selon l'une quelconque des revendications précédentes, et comprenant au moins un ventilateur (26) ; et au moins un échangeur de chaleur (27) ; et une pluralité de chicanes de séparation (28) réparties le long du même plan et logées dans le premier coffrage plat (22 ; 37).

10. Dispositif selon la revendication 9, dans lequel le premier corps en forme de boîte (23 ; 41) comprend deux panneaux de base (29) se faisant face et parallèles l'un à l'autre, l'échangeur de chaleur (27) et la pluralité de chicanes de séparation (28) étant en contact avec les deux panneaux de base (29).

11. Dispositif selon la revendication 10, dans lequel au moins le ventilateur (26) est agencé entre lesdits panneaux de base (29) et entre deux entretoises (30).

12. Dispositif selon la revendication 10 ou la revendication 11, dans lequel lesdites chicanes de séparation (28) et lesdites entretoises (30) sont fixées, en particulier collées, à l'un desdits panneaux de base (29) ou sont rendues solidaires d'un desdits panneaux de base (29).

13. Dispositif selon l'une quelconque des revendications précédentes, dans lequel le premier coffrage (22 ; 37) est constitué d'un matériau polymère, en particulier du PSU.

14. Procédé d'installation d'un dispositif de traitement de l'air selon l'une quelconque des revendications précédentes, le procédé comprenant :
- l'application d'un doublage sec (4) sur un mur porteur ou rideau (3) d'un mur périmétrique (2) d'un bâtiment qui forme un bord entre une face (8) et la face externe (6) et/ou la face interne (7) du mur périmétrique ; et
- le fait de loger dans le doublage sec (4) le premier coffrage plat (22 ; 37) du dispositif de traitement de l'air, comprenant le premier corps en forme de boîte (23 ; 41) ; le premier panneau latéral (24 ; 42) ; au moins une première embouchure (25 ; 43) pour le passage d'au moins un écoulement d'air, un coffrage dans le doublage sec (4), le deuxième coffrage plat (9 ; 36), comprenant le deuxième corps en forme de boîte (21 ; 38) ; le deuxième panneau latéral (13 ; 39), et au moins une deuxième embouchure (14 ; 40) pour le passage d'au moins un écoulement d'air ;
le premier coffrage (22 ; 37) étant logé dans le deuxième coffrage (9 ; 36) et sélectivement inséré dans le, et extrait du, deuxième corps en forme de boîte (21 ; 38) ; et l'au moins une première embouchure (25 ; 43) étant en communication avec la deuxième embouchure (14 ; 40) pour le passage dudit au moins un écoulement d'air jusque dans le doublage sec (4) lors de l'application du doublage sec (4).

15. Procédé selon la revendication 15, et comprenant le fait d'agencer le premier panneau latéral (24 ; 42) au niveau ou à proximité de ladite face (8) .
